Europäisches Patentamt

European Patent Office

Office européen des brevets

(11) Veröffentlichungsnummer: **0 498 946 A1**

## EUROPÄISCHE PATENTANMELDUNG

(21) Anmeldenummer: **91120238.0**

(22) Anmeldetag: **27.11.91**

(51) Int. Cl.5: **B62D 5/04**

(30) Priorität: **09.02.91 DE 4104048**

(43) Veröffentlichungstag der Anmeldung: **19.08.92 Patentblatt 92/34**

(84) Benannte Vertragsstaaten: **DE FR GB IT**

(71) Anmelder: **ROBERT BOSCH GMBH
Postfach 30 02 20
W-7000 Stuttgart 30(DE)**

(72) Erfinder: **Schlagmueller, Walter
Frankenstrasse 39
W-7141 Schwieberdingen(DE)**

(54) **Elektromotorische Servolenkung.**

(57) Es wird eine elektromotorische Servolenkung vorgeschlagen, bei der jegliches Spiel zwischen dem Lenkrad (1) und einem mit einer Zahnstange kämmenden Ritzel (3) durch zwei Spielausgleichseinrichtungen (10 und 16) vermieden ist. Die Spielausgleichseinrichtungen (10 und 16) sind mit Federn (9 und 15) ausgerüstet, so daß sie selbstnachstellend sind.

Auf diese Weise wird dem Fahrer eines lenkbaren Fahrzeuges beim Lenken das Gefühl einer unmittelbaren und exakten Verbindung mit der Straße vermittelt.

FIG. 1

## Stand der Technik

Die Erfindung geht aus von einer elektromotorischen Servolenkung nach der Gattung des Hauptanspruchs. Eine derartige Servolenkung ist älter angemeldet durch die deutsche Anmeldung P 39 33 771.5.

Beim Gegenstand dieser älteren Anmeldung handelt es sich um eine Servolenkung für Kraftfahrzeuge für den Parkiergeschwindigkeitsbereich (Park-Servo), mit einem Untersetzungsgetriebe zwischen einem Servomotor und der Lenksäule bzw. dem zur mechanischen Radverstellung weiterführenden Antrieb. Dabei wird mindestens eine Kupplungsbacke so angeordnet, daß sie eine Antriebsverbindung vom Servomotorantrieb zur Lenkgetriebeseite der Lenksäule dann herstellt, wenn bei manueller Momenteneinleitung am Lenkrad ein mit der Lenkradseite der Lenksäule verbundener Mitnehmer den erforderlichen Kupplungsanpreßdruck durch mechanische Einwirkung auf die mindestens eine Kupplungsbacke erzeugt, wobei unter der Kupplungseinwirkung stehende Zahnräder als Hohlzahnräder ausgebildet sind, die auf einer mit dem Antriebslenksäulenbereich drehfest verbundenen Kupplungsnabe gelagert sind.

Gemäß der Erfindung soll nun eine solche Servolenkung so verbessert werden, daß für den gsamten Lenkstrang, also von der Kupplung bis zu der Lenksäule, abtriebsseitig, jedes Spiel eliminiert wird, um die Lenkung so exakt wie möglich zu machen.

Diese Aufgabe wird gemäß der Erfindung bei der gattungsgemäßen Servolenkung durch die kennzeichnenden Merkmale des Patentanspruchs gelöst.

## Zeichnung

Ein Ausführungsbeispiel der Erfindung ist in der Zeichnung dargestellt und in der nachfolgenden Beschreibung näher erläutert.

## Beschreibung des Ausführungsbeispiels

Eine elektromotorische Servolenkung hat eine Lenksäule 1, die an ihrem einen Ende ein Lenkrad 2 trägt und die an ihrem anderen Ende mit einem Ritzel 3 für eine nicht dargestellte Lenkungs-Zahnstange versehen ist. Zum Lenkrad 2 hin ist die Lenksäule 1 verjüngt und nimmt eine hohle Kupplungswelle 4 auf, die über eine Kupplung 17 mit Zahnrädern 18 und einem Elektromotor 19 als Servokraftgeber verbindbar ist. Damit diese Aufnahme der Kupplungswelle 4 von der Lenksäule 1 spielfrei erfolgen kann, ist zwischen einem Kegelbereich 5 der Lenksäule 1 und einer zylindrischen Ausnehmung 6 der Kupplungswelle 4 eine kegelige Lagerbuchse 7 angeordnet, die von einer sich an einer Kupplungswellen-Schulter 8 abstützenden Schrauben-Druck-Feder 9 in eine spielfreie Kraftschluß-Stellung zwischen Kupplungswelle 4 und Lenksäule 1 drängbar ist. Als Werkstoff für die Lagerbuchse 7 ist PTFE wegen des niedrigen Reibwertes besonders geeignet. Die aus Lagerbuchse 7 und Feder 9 bestehende Spielausgleichseinrichtung trägt die Bezugszahl 10.

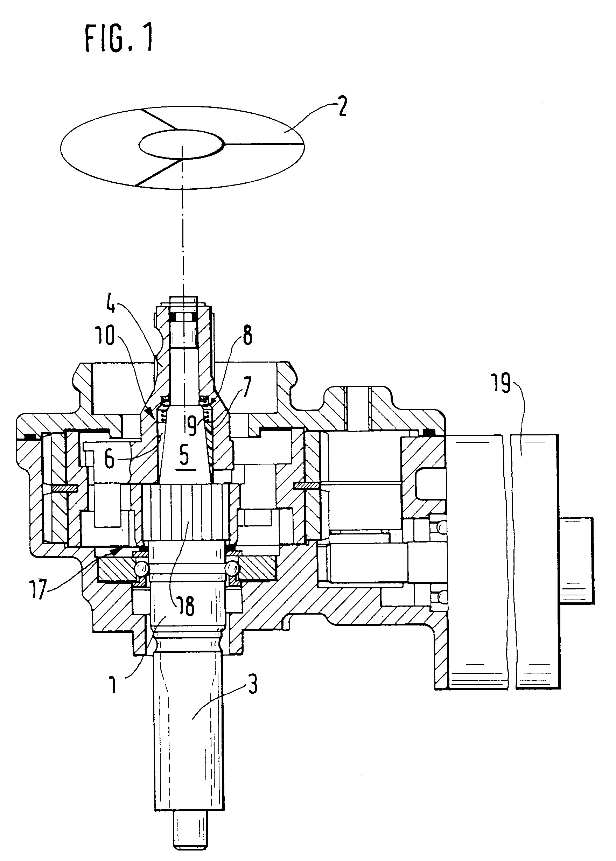

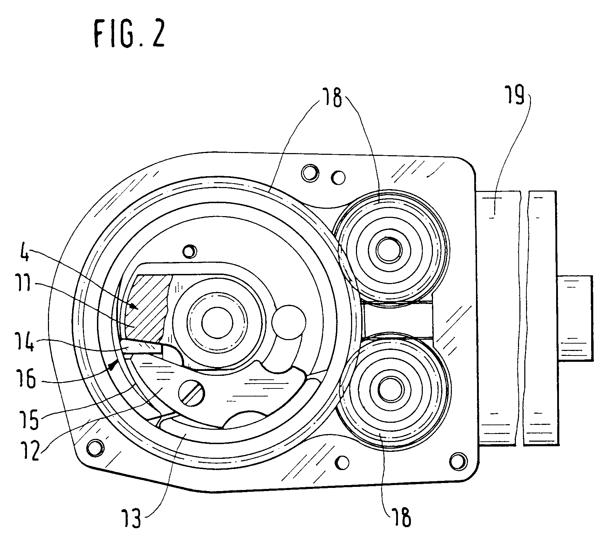

Die Kupplungswelle 4 hat, wie in der Figur 2 zu erkennen ist, eine Nase 11, die einem Hebel 12 einer Kupplungsbacke 13 gegenübersteht. Um eine spielfreie Verbindung zwischen der Kupplungsbacke 13 und der Nase 11 zu erreichen, ist ein Keil 14 zwischen den Kupplungshebel 12 und der Nase 11 eingeführt, der unter der Wirkung einer bogenförmigen Blattfeder 15 steht, die bestebt ist, den Keil 14 so tief wie mögich zwischen Nase 11 und Kupplungshebel 12 eindrücken. Damit ist auch hier eine Spielausgleichseinrichtung geschaffen, die aus Keil 13 und Feder 15 besteht; sie trägt die Bezugszahl 16.

Es ist zu erkennen, daß beide Spielausgleichseinrichtungen 10 und 16 jeweils ein Keilelement, einmal in Form der kegeligen Lagerbuchse 7 und einmal in Form des Keils 13, aufweisen und jedes Keilelement unterliegt der Kraft einer Feder 9 bzw. 15, die bestrebt ist, das Keilelement so weit wie möglich zwischen die jeweiligen Gegenflächen einzudrücken. Auf diese Weise werden jegliche Toleranzen eliminiert und zwar derart, daß jedes Spiel zwischen dem Lenkrad 4 und dem mit der Zahnstange kämmenden Ritzel 3 ausgeglichen ist. Der Spielausgleich ist darüber hinaus durch die ständige Einwirkung der Feder 9 bzw. 15 auch noch selbst nachstellend.

Als Folge davon ist die Lenkung sehr exakt und vermittelt dem Fahrer das Gefühl einer unmittelbaren Verbindung mit der Straße.

## Patentansprüche

1. Elektromotorische Servolenkung für Kraftfahrzeuge, insbesondere für den Parkiergeschwindigkeitsbereich, mit einem Getriebe zwischen einem Servomotor und der Lenksäule bzw. dem zur mechanischen Radverstellung weiterführenden Abtrieb und mit einer Kupplung zur Herstellung einer Antriebsverbindung vom Servomotor zur Lenksäule bzw. Abtrieb, dadurch gekennzeichnet daß zwischen der Kupplung (Kupplungsbacke 13) und der Lenksäule (1) zwei Spielausgleichseinrichtungen (10 und 16) vorgesehen sind, die jeweils als ein unter der Kraft einer Feder (9 bzw. 15) stehendes Keilelement (Lagerbuchse 7, Keil 19) ausgeführt sind.

2. Elektromotorische Servolenkung nach Anspruch 1, dadurch gekennzeichnet, daß eine Spielausgleichseinrichtung (16) zwischen einer Kupplungswelle (4) und einem Kupplungshebel (12) angeordnet ist und als radial in die Kupplungswelle (4) eingreifender, unter der Wirkung einer bogenförmigen Blattfeder (15) stehender Keil (14) ausgebildet ist.

3. Elektromotorische Servolenkung nach Anspruch 1, dadurch gekennzeichnet, daß eine Spielausgleichseinrichtung (10) zwischen einer hohlen Kupplungswelle (4) und der Lenksäule (1) angeordnet ist und als in die Lagerung zwischen hohler Kupplungswelle (4) und Lenksäule (1) eingreifende, kegelige Lagerbuchse (7) und axial auf die Lagerbuchse (7) drückende Schrauben-Druckfeder (9) ausgebildet ist.

4. Elektromotorische Servolenkung nach Anspruch 3, dadurch gekennzeichnet, daß die kegelige Lagerbuchse (7) mit einem Längsschlitz versehen ist.

5. Elektromotorische Servolenkung nach Anspruch 3 oder 4, dadurch gekennzeichnet, daß die kegelige Lagerbuchse (7) aus Kunststoff, vorzugsweise aus PTFE besteht.

FIG. 1

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 492 558 (CITROEN ET AL.)<br>* Ansprüche 1-4 *<br>* Seite 4, Zeile 28 - Zeile 34; Abbildungen *<br>--- | 1 | B62D5/04 |
| A | FR-A-2 642 496 (RENAULT)<br>* Seite 1, letzter Absatz - Seite 2, Absatz 3; Abbildungen 1,2 *<br>--- | 1 | |
| A | GB-A-2 228 461 (JIDOSHA KIKI)<br>* Zusammenfassung; Abbildungen *<br>----- | 1 | |
| | | | **RECHERCHIERTE SACHGEBIETE (Int. Cl.5)**<br><br>B62D |

Der vorliegende Recherchenbericht wurde für alle Patentansprüche erstellt

| Recherchenort | Abschlußdatum der Recherche | Prüfer |
|---|---|---|
| BERLIN | 26 MAI 1992 | BROYDE M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes Dokument